# EUROPEAN PATENT APPLICATION

(11) **EP 0 990 837 A1**
(43) Date of publication of application: **05.04.2000**
(21) Application number: 98118451.8
(22) Date of filing: 30.09.1998
(51) Int. Cl.: F17D 5/02, G01M 3/28

(54) **Method for localizing a leakage in a pipeline system**

(71) Applicant: LICENERGY A/S, 3460 Birkerod (DK)
(72) Inventor: Gottlieb, Lars, 3460 Birkerod (DK); Karas, Bo, 3450 Allerod (DK)
(74) Representative: Roerboel, Leif

(57) **Abstract**

The method comprises measuring the operating pressure at a plurality of measuring positions in a pipeline system and detecting the presence of a leak in any convenient manner. The pressure measurements from each location are stored in such a way that at any given time the pressures measured at each location during a previous time interval of a certain length is in storage. When a leak is detected, the stored pressure measurements are analysed in order to localize the leak. By storing the pressure measurements, preferably locally at the measuring positions, it is possible to have the necessary information in storage for the analyses whenever a leak is detected and the analyses may be performed off-line with ample time for performing the analyses and the pipeline system can be shut down as soon as the leak is detected.

## Description

The present invention relates to a method for localizing a leakage in a pipeline system comprising the steps of measuring the pressure in the pipeline system at a plurality of measuring locations and analysing the pressure measurements following the detection of the presence of a leak.

From FR-2,490,818 a method according to the preamble of claim 1 is known, in which a leakage is localized in a branched pipeline network without using a generated pressure change but by registering the arrival time of a pressure drop wave in the operating pressure in at least three points in the pipeline system and based on the time differences between arrival of this pressure drop wave in pairs of such measuring points calculating the possible locations of the leakage giving rise to the pressure drop wave and using co-inciding calculated points as the detected leakage position. Although this method functions very well in theory, it may be affected by pressure changes which occur due to changes in the operating conditions and thereby give rise to false alarms due to such changes which are not caused by the emergence of a leak.

From DE-195 42 890 it is known to detect the leakage position and leakage rate in a pipeline by generating a pressure change in the fluid in the pipeline and measuring the created disturbance of the pressure as a function of time in three different points along the pipeline. A simulation model is used to calculate the expected pressure as a function of time in one of the three points. The simulation model leak position and leak rate parameters are varied until a minimal deviation between measured and simulated pressure is achieved and the corresponding leakage position and rate parameters are considered to be the actual leakage position and rate. This method makes it necessary to keep the pipeline under pressure during detection and it is necessary to create a pressure change in order to detect a leak, thereby incurring the risk of a major leakage volume.

it is the object of the present invention to provide a method for localizing a leakage in a pipeline system, of the kind referred to above, with which it is possible to localize the leakage without the necessity of keeping the pipeline system under pressure, once the leakage is detected. This object is achieved with a method of said kind, which according to the invention comprises the steps set forth in the characterizing clause of claim 1. With this method, the pressure measurements before, during and immediately after the emergence of a leakage are available from all the main and substations along the pipeline system for analyses off-line, giving ample time for analysing and selecting those parts of the pressure measurements which are related to the emergence of the leakage, eliminating noise and other irrelevant parts.

In a preferred embodiment of the method in accordance with the invention, the storing of pressure measurements is performed locally in the individual main and substations and the stored pressure measurements are transmitted to the centralized computer for analyses on request, whenever a leak is detected. In this way the demands on data transmission is reduced substantially while the transmission of data is only performed when necessary and the time for performing the transmission is not critical and accordingly, the transmission can be performed at a suitable speed and may comprise re-transmission of faulty data.

It is furthermore preferred that the analysis comprises a validation of the detection of the presence of a leak in order to confirm or invalidate the leak detection, thereby increasing the confidence level of the corresponding leakage alarm and possible consequent shut-down of the pipeline.

In the following detailed part of the present description, the invention will be explained in more detail with reference to the exemplary embodiment of a method according to the invention, which may be used on a pipeline as shown in the drawing, in which
Figure 1 shows a section of a pipeline with several main and substations and indicating the transmission of pressure measurements from the individual stations to a centralized computer, and
Figure 2 shows a typical pressure measurement in connection with the emergence of a leak.

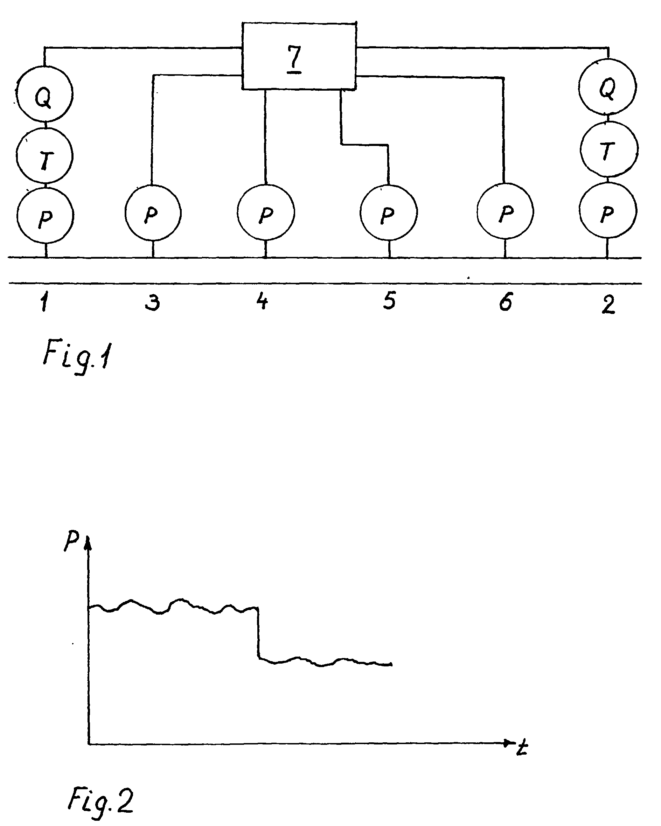

The pipeline section shown in Figure 1 comprises two main stations 1, 2, one at each end of the section, and several substations 3-6 along the pipeline section. Each of the two main stations comprises equipment for measuring the pressure P, the temperature T, and the flow Q of the fluid in the pipeline. Each of the substations comprises equipment for measuring the pressure P of the fluid in the pipeline. In the embodiment shown, each of the main and substations comprises a cyclic buffer or other data storage means for storing the pressure measurements provided during the previous 30 minutes. This time interval will in each case have to be dimensioned in accordance with the time that may be expected from the emergence of a leak until the leak is detected and the data in the buffers are transmitted to the centralized computer 7 for analysis. Furthermore, the size of each of the cyclic buffers will have to be sufficient to store the pressure measurements for the above time interval with sufficient time resolution to be able to perform the analysis for localizing the leak with sufficient accuracy. Naturally, methods for compressing data may be used in order to minimize the necessary storage capacity, as long as sufficient information is retained for the analysis.

When a leak is detected, this detection being performed in any known manner, the centralized computer requests selected main and substations to transmit the contents of the cyclic buffers to the centralized computer and thus receives this information for analyses. The analyses can be performed off-line in such a way that the pressure data can be replayed several times in order to eliminate data not related to the emergence of the leak. The method is also advantageous by the fact that the analyses can be made with the knowledge that a leak is present.

As an alternative to the storage of the pressure measurements locally in the individual stations, which has the advantage of reducing the amount of data transmission from the stations to the centralized computer, the pressure measurements may continuously be transmitted to the centralized computer for storing in cyclic buffers or the like therein. However, this will require on-line, real-time transmission of pressure data from each of the stations to the centralized computer.

Small leaks are difficult to detect with a high degree of certainty. In this connection, the method may be used to confirm or invalidate detected small leaks, which would otherwise be neglected due to the low confidence level of the detection. In this respect, the method will be able to prevent that small leaks give rise to environmental pollution.

The method is primarily for use in connection with pipelines for natural gas, crude oil or mixtures thereof, but may naturally be used in any other type of pipeline system.

## Claims

1. Method for localizing a leakage in a pipeline system comprising the steps of:
a) measuring the operating pressure at a plurality of measuring locations in the pipeline system,
b) detecting the presence of a leak,
**characterized** by further comprising the following steps:
c) storing the pressure measurements from step a) from each location, thus at any given time having the pressures measured at each location during a previous time interval of a certain length in storage, and,
d) analysing the stored pressure measurements in order to localize a leak, when the analysis in step b) detects the presence of a leak.

2. Method in accordance with claim 1, **characterized** by step c) being performed locally at the measuring locations.

3. Method in accordance with claim 1 or 2, **characterized** by step d) being performed in a centralized computer, and that the stored pressure measurements are transmitted to the centralized computer after detection of the presence of a leak in step b).

4. Method in accordance with any of the preceding claims, **characterized** by the measuring locations being positioned in main- and substations in the pipeline system.

5. Method in accordance with claims 3 and 4, **characterized** by the centralized computer acquiring the stored pressure measured from main and substations.

6. Method in accordance with any of the preceding claims, **characterized** by the analyses in step d) being performed off-line.

7. Method in accordance with any of the preceding claims, **characterized** by further comprising analyses of the stored pressure measurements in order to quantify the leakage rate.

8. Method in accordance with any of the preceding claims, **characterized** by further comprising the step of analysing other parameters measured, such as temperature at different locations, flow at different locations, or the like, as a supplement to the analyses of the pressure measurements in step d).

9. Method in accordance with any of the preceding claims, **characterized** by further comprising the step of analysing the pressure measurements to validate the correctness of the detection of the presence of a leak, in order to confirm or invalidate this leak detection.

10. Method in accordance with any of the preceding claims, **characterized** by the measurements and leakage localization being performed without the generation of a pressure change.

11. Method in accordance with any of the preceding claims, **characterized** in that the analyses in step d) comprise analysing the stored pressure measurements in order to eliminate components in the pressure measurements which are not related to the emergence of the leak.

12. Method in accordance with any of the preceding claims, **characterized** in that the analyses in step d) comprise detecting the time of arrival at each location of a pressure drop wave generated by the emergence of a leak and using said arrival times to calculate the position of the leak.
